# FASCICULE DE BREVET EUROPEEN

(11) **EP 0 805 641 B1**
(45) Date de publication et mention de la délivrance du brevet: **23.09.1998**
(21) Numéro de dépôt: 96901827.4
(22) Date de dépôt: 22.01.1996
(51) Int. Cl.: A47J 42/56, A47J 43/044

(54) **APPAREIL MENAGER A COUTEAU ROTATIF, TEL QU'UN HACHOIR**
KÜCHENGERÄT MIT DREHENDEM MESSER, WIE EIN HÄCKSLER
HOUSEHOLD APPLIANCE WITH A ROTARY CUTTER, SUCH AS A CHOPPER

(30) Priorité: 24.01.1995 FR 9500784
(43) Date de publication de la demande: 12.11.1997
(73) Titulaire: MOULINEX S.A., 75008 Paris (FR)
(72) Inventeur: MARRIERE, Marc, F-53300 Ambrières-les-Vallées (FR); TROCHERIE, Jean-Pierre, F-53370 Saint-Pierre-des-Nids (FR)
(74) Mandataire: Busquets, Jean-Pierre
(86) Numéro de dépôt international: FR9600099
(87) Numéro de publication internationale: WO9622720

(56) Documents cités:
- EP-A- 0 233 515
- EP-A- 0 567 853
- DE-A- 3 904 983
- DE-B- 1 026 934
- GB-A- 826 120

## Description

La présente invention se rapporte aux appareils ménagers, tels que des hachoirs, comportant un bol ouvert sur lequel est placé un couvercle amovible de fermeture conformé en une coupelle ayant un fond et une paroi latérale, et dans lequel s'étend verticalement un arbre rotatif amovible dont l'extrémité inférieure porte un couteau et est engagée dans un palier monté sur le fond du bol, et dont l'extrémité supérieure traverse le fond du couvercle, et un bloc moteur amovible comprenant un boîtier agencé en partie autour du couvercle et renfermant un moteur électrique dont l'arbre de sortie est adapté à venir s'accoupler avec l'arbre portant le couteau. Un tel appareil est connu du document EP-A-233515.

On sait que de tels appareils ménagers, qualifiés de petits préparateurs culinaires, sont particulièrement efficaces notamment pour hacher, mixer et émulsionner les matières alimentaires.

Avec des appareils connus de ce genre, il peut arriver que par imprudence, l'utilisateur accouple l'arbre portant le couteau avec l'arbre de sortie du moteur sans la présence du bol, et, tenant d'une main le bloc moteur et de l'autre le couvercle posé sur le bloc moteur, provoque la mise en marche de l'appareil ; le couteau en mouvement et non protégé risque alors d'exposer l'utilisateur à de graves blessures.

L'invention a pour but de supprimer ce risque et de réaliser un appareil ménager à couteau rotatif, du type exposé ci-dessus, qui garantisse d'une manière simple une sécurité absolue à l'utilisateur en interdisant la mise en marche de l'appareil tant que le couvercle n'est pas en place sur le bol.

Selon l'invention, la paroi latérale du couvercle est composée d'une pluralité de portions latérales qui sont séparées les unes des autres et qui sont déformables élastiquement entre une position de travail en laquelle elles sont amenées par déformation élastique vers l'intérieur lors de la mise en place du couvercle sur le bol et dans laquelle leurs parties supérieures s'engagent dans un espace annulaire situé en bordure périphérique de la partie inférieure du boitier du bloc moteur et au moins l'une d'elles actionne un interrupteur agencé dans le circuit d'alimentation électrique du moteur de manière à autoriser la mise en marche du moteur, et une position de repos dans laquelle leurs parties supérieures sont en butée contre le bord inférieur de la paroi latérale du boitier du bloc moteur lorsque le couvercle n'est pas correctement mis en place sur le bol.

Ainsi, grâce à ces portions latérales élastiquement déformables du couvercle, il est désormais impossible de mettre en marche l'appareil lorsque le bol n'est pas présent ou lorsque le couvercle n'est pas complètement placé sur le bol, évitant ainsi tout risque de blessure. Par ailleurs, l'invention utilise judicieusement et d'une manière simple le couvercle habituel de ce type d'appareil pour en faire en soi un couvercle de sécurité, donc sans nécessiter l'adjonction de pièces supplémentaires, ce qui est particulièrement économique pour une fabrication en grande série de ces appareils ménagers.

Les caractéristiques et avantages de l'invention ressortiront d'ailleurs de la description qui va suivre, à titre d'exemple non limitatif, en référence aux dessins annexés dans lesquels :
- la figure 1 est une vue en coupe verticale d'un appareil ménager selon l'invention, en position arrêt, montrant un bol et un couvercle de sécurité assemblés l'un à l'autre
- la figure 2 est une vue en perspective du couvercle de sécurité ; et
- la figure 3 est une vue partielle en coupe verticale de l'appareil de la figure 1, mais montrant le couvercle de sécurité avant assemblage avec le bol.

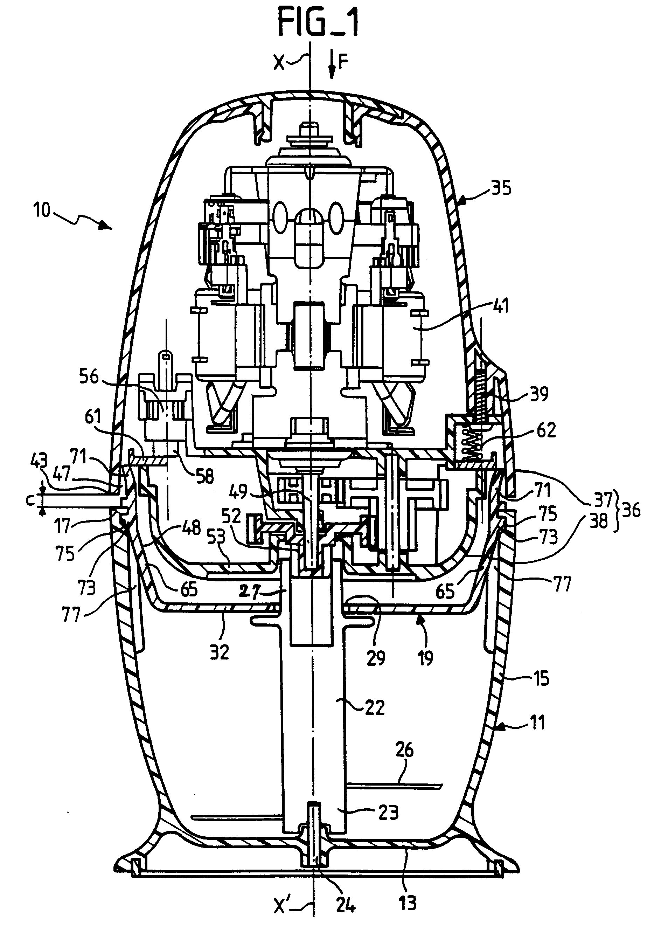

L'appareil ménager 10 illustré à la figure 1 est un petit hachoir de forme générale cylindro-ovale d'axe XX'. Il comporte un bol de travail 11 ayant un fond 13 et une paroi latérale 15 à bord supérieur circulaire 17, et un couvercle amovible 19 dit de sécurité, conforme à l'invention, que l'on décrira en détail par la suite, et qui est conformé en une coupelle destinée à fermer par verrouillage le bol 11 lors de son montage sur celui-ci.

Dans le bol 11, figure 1, est agencé verticalement, selon l'axe XX', un arbre rotatif amovible 22 dont l'extrémité inférieure 23, d'une part, est engagée sur un petit palier cylindrique 24 axé sur l'axe XX' et ancré dans le fond 13 du bol 11, et d'autre part, porte un couteau surmoulé 26, par exemple à deux lames. L'extrémité supérieure 27 de l'arbre 22 fait librement saillie à travers un orifice 29 pratiqué dans le fond plat 32 du couvercle 19 un fois placé sur le bol 11.

Le hachoir comporte en outre un bloc moteur 35 comprenant un boîtier amovible 36 constitué ici de deux coques 37 et 38 emboîtées tête-bêche l'une dans l'autre et assemblées entre elles par tout moyen de fixation approprié, tel que des vis 39, à savoir : une coque dite supérieure 37 renfermant un moteur électrique 41 et conformée extérieurement en un dôme à base circulaire dont le bord inférieur 43 est situé à l'aplomb du bord supérieur 17 du bol 11, à distance prédéterminée c de celui-ci lorsque l'appareil est à l'arrêt (figure 1), et une coque dite inférieure 38 conformée extérieurement en un dôme inversé à base circulaire plus petite que celle de la coque 37, et constituant le fond proprement dit du boitier 36. Les bases circulaires respectives des deux coques 37 et 38 définissent entre elles un espace annulaire interne 47 destiné à recevoir la partie terminale de la paroi latérale 48 du couvercle 19, comme on le voit sur la figure 1. Le moteur 41 présente un arbre de sortie 49 qui traverse intérieurement la coque 38 du boîtier 36, de manière coaxiale à l'arbre 22, et qui porte un entraîneur 52 débouchant sur le fond 53 de la coque 38 du boîtier 36 et s'accouplant directement avec l'extrémité supérieure libre 27 de l'arbre porte-couteau 22, voir figure 1.

Dans l'exemple de réalisation illustré à la figure 1, le bloc moteur 35 comporte un interrupteur 56, du type à touche de manoeuvre 58, qui commande la fermeture du circuit d'alimentation électrique du moteur 41 lorsque l'appareil est mis en marche sous l'action d'une pression exercée par l'utilisateur sur le bloc moteur 35, selon le sens de la flèche F (figure 1), lequel bloc moteur 35 se déplace suivant une course c correspondant à la distance prédéterminée séparant les deux bords 17 et 43, respectivement du bol 11 et de la coque supérieure 37 du boitier 36. Cet interrupteur 56 est actionné dans le sens de la fermeture par une couronne 61 disposée horizontalement dans le boitier 36 en débouchant dans l'espace annulaire 47, et mobile en translation verticale à l'encontre d'au moins un ressort de rappel 62 en étant commandé par la partie terminale de la paroi latérale 48 du couvercle 19.

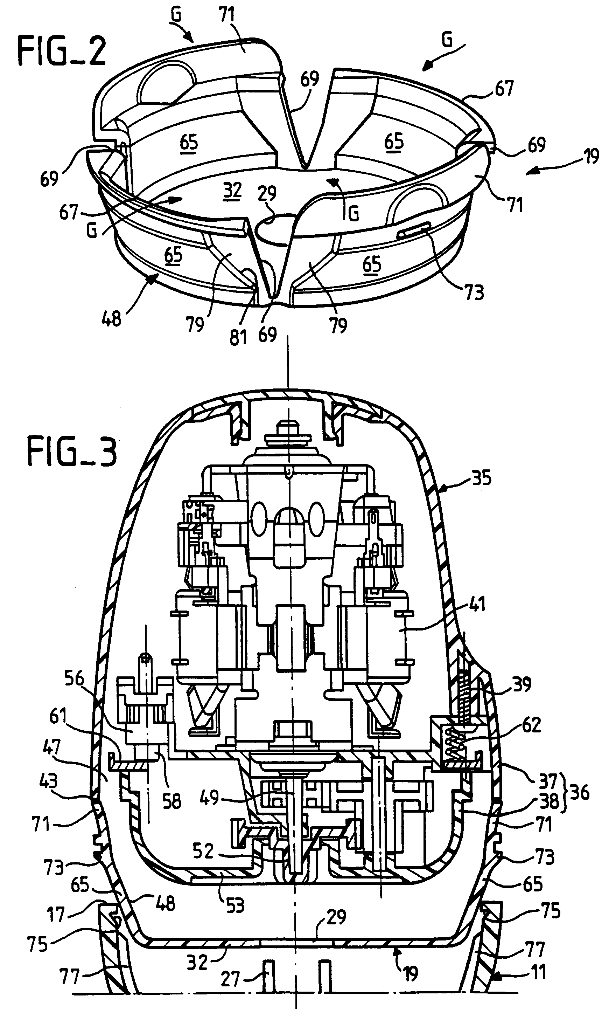

Selon l'invention, et comme le montre la figure 2, la paroi latérale 48 du couvercle 19 est composée d'une pluralité de portions latérales 65, en l'occurrence au nombre de quatre, qui sont séparées les unes des autres et qui sont déformables élastiquement entre une position de travail (figure 1) en laquelle elles sont amenées par déformation élastique vers l'intérieur du bol 11, suivant le sens des flèches G de la figure 2, lors de la mise en place du couvercle 19 sur le bol 11 et dans laquelle leurs parties supérieures respectives 67 s'engagent dans l'espace annulaire 47 et au moins l'une d'elles actionne, via la couronne 61, l'interrupteur 56 pour commander la fermeture du circuit d'alimentation électrique du moteur 41, et une position de repos (figure 3) dans laquelle leurs parties supérieures respectives 67 sont en butée contre le bord inférieur 43 de la coque supérieure 37 du boîter 36 lorsque le couvercle 19 n'est pas correctement mis en place sur le bol 11.

Dans l'exemple de réalisation illustré à la figure 2, les quatre portions latérales flexibles 65 du couvercle 19 sont diamètralement opposées deux à deux et sont conformées sensiblement à la manière de larges pétales bordant le fond 32 du couvercle 19 et formant ensemble une corolle en étant espacés les uns des autres par quatre échancrures 69 sensiblement en forme de V.

Le couvercle 19 est réalisé, de préférence, en une seule pièce moulée en une matière thermoplastique à propriété élastique telle que, par exemple, le polyoxyméthylène.

Dans cet exemple de réalisation, comme le montre la figure 2, deux des quatre portions latérales 65 du couvercle 19, diamètralement opposées, se prolongent ves le haut, au niveau de leurs parties supérieures respectives 67, par deux secteurs respectifs formant chacune une patte 71, de section droite sensiblement en L, qui est destinée, après montage du couvercle 19 sur le bol 11 par suite de la déformation élastique vers l'intérieur du bol des quatre portions latérales 65 du couvercle, à venir en appui contre la face inférieure de la couronne 61 (figure 1) pour commander celle-ci en vue de l'actionnement de l'interrupteur 56.

Ces deux portions latérales 65 du couvercle à patte de commande 71, figure 2, comportent respectivement, sur leurs faces externes respectives, deux bossages 73 dont un seul est visible sur la figure 2, qui viennent s'engager par encliquetage, lors de la mise en place du couvercle 19 sur le bol 11, dans deux encoches conjuguées 75 pratiquées dans la face interne de la paroi latérale 15 du bol 11, voir figure 1.

Grâce à la forme en L des pattes 71, on comprend que le couvercle 19 est bien retenu sur le bol 11 du fait que le bord supérieur 17 du bol est pincé entre les bossages 73 et la petite branche du L.

Avantageusement, la face interne de la paroi latérale 15 du bol 11 comporte, sensiblement à partir de son bord supérieur 17, une pluralité de nervures verticales à section horizontale lenticulaire formant cames 77, en nombre égal à celui des échancrures 69 du couvercle 19, à savoir quatre dans l'exemple choisi, sur chacune desquelles viennent s'engager deux régions respectives 79 (figure 2) de deux portions latérales 65 du couvercle situées de part et d'autre d'une même échancrure 69 de manière à favoriser la déformation élastique vers l'intérieur des quatre portions latérales 65 du couvercle 19 lors de la mise en place du couvercle sur le bol 11. Cette déformation élastique est également facilitée par le fait que les deux régions respectives 79 situées de part et d'autre de la même échancrure 69 forment ensemble une dépression 81, comme on le voit sur la figure 2, contre laquelle vient appuyer la nervure correspondante 77 du bol 11 lors du montage du couvercle 19 sur le bol 11.

Ainsi, grâce à l'invention, on comprendra que si le couvercle 19 n'est pas complètement placé dans le bol 11 (figure 3), ou bien si le bol 11 n'est pas présent, les quatre portions latérales 65 du couvercle 19 ne sont pas sollicitées élastiquement, et donc leurs parties supérieures 67 - 71 dans l'exemple illustré - sont en butée contre le bord inférieur 43 de la coque supérieure 37 du boîtier 36 lorsque l'utilisateur désire monter le bloc moteur 35, comme illustré à la figure 3. On empêche ainsi tout assemblage entre le couvercle 19 et le bloc moteur 35, et donc tout actionnement de l'interrupteur 56, de sorte que l'appareil ne peut être mis en marche, garantissant ainsi une sécurité absolue.

Pour utiliser l'appareil ménager, il convient donc de verrouiller correctement le couvercle 19 sur le bol 11 ; ce verrouillage est obtenu grâce à la déformation élastique vers l'intérieur du bol 11 des quatre portions latérales 65 du couvercle 19 lors de la mise en place complète de ce dernier sur le bol 11. Dès lors, le verrouillage correct du couvercle 19 autorise le montage du bloc moteur 35 au cours duquel les quatre portions latérales 65 du couvercle 19 s'engagent dans l'espace annulaire 47 dudit bloc moteur, les deux pattes respectives 71 de deux des portions latérales 65 du couvercle 19 venant en appui contre la face inférieure de la couronne 61, comme illustré à la figure 1. Par pression suffisante exercée par l'utilisateur sur le bloc moteur 35, dans le sens de la flèche F de la figure 1, permettant d'abaisser celui-ci suivant la course c, la couronne 61 monte en étant sollicitée par les deux pattes 71 et actionne l'interrupteur 56 qui se ferme, ce qui provoque la mise en marche du moteur.

Dès que l'utilisateur relâche sa pression sur le bloc moteur 35, celui-ci remonte pour reprendre sa position initiale de la figure 1 ; l'interrupteur 56 s'ouvre alors et coupe l'alimentation du moteur 41 qui s'arrête.

## Revendications

1. Appareil ménager à couteau rotatif, tel qu'un hachoir, comportant un bol ouvert (11) sur lequel est placé un couvercle amovible de fermeture (19) conformé en une coupelle ayant un fond (13) et une paroi latérale (15), et dans lequel s'étend verticalement un arbre rotatif amovible (22) dont l'extrémité inférieure (23) porte un couteau (26) et est engagée dans un palier (24) monté sur le fond du bol (11), et dont l'extrémité supérieure (27) traverse le fond du couvercle (19), et un bloc moteur amovible (35) comprenant un boîtier (36) agencé en partie autour du couvercle (19) et renfermant un moteur électrique (41) dont l'arbre de sortie (49) est adapté à venir s'accoupler avec l'arbre (22) portant le couteau,
**caractérisé en ce que** la paroi latérale (48) du couvercle (19) est composée d'une pluralité de portions latérales (65) qui sont séparées les unes des autres et qui sont déformables élastiquement entre une position de travail en laquelle elles sont amenées par déformation élastique vers l'intérieur lors de la mise en place du couvercle (19) sur le bol (11) et dans laquelle leurs parties supérieures (67,71) s'engagent dans un espace annulaire (47) situé en bordure périphérique de la partie inférieure du boîtier (36) du bloc moteur (35) et au moins l'une d'elles (71) actionne un interrupteur (56) agencé dans le circuit d'alimentation électrique du moteur de manière à autoriser la mise en marche du moteur, et une position de repos dans laquelle leurs parties supérieures (71) sont en butée contre le bord inférieur (43) de la paroi latérale du boîtier (36) du bloc moteur lorsque le couvercle (19) n'est pas correctement mis en place sur le bol (11).

2. Appareil ménager selon la revendication 1,
**caractérisé en ce que** les portions latérales (65) du couvercle (19) sont conformées sensiblement à la manière de larges pétales qui sont espacés les uns des autres par des échancrures (69) et qui forment ensemble une corolle.

3. Appareil ménager selon la revendication 2,
**caractérisé en ce que** la face interne de la paroi latérale (15) du bol (11) comporte, sensiblement à partir du bord supérieur (17) de ladite paroi (15), une pluralité de nervures verticales formant cames (77), en nombre égal à celui des échancrures (69) du couvercle, sur chacune desquelles viennent s'engager deux régions respectives (79) de deux portions latérales (65) du couvercle situées de part et d'autre d'une même échancrure (69) de manière à favoriser la déformation élastique vers l'intérieur des portions latérales (65) du couvercle (19) lors de la mise en place de ce dernier sur le bol (11).

4. Appareil ménager selon la revendication 3,
**caractérisé en ce que** les deux régions respectives (79) des deux portions latérales (65) du couvercle situées de part et d'autre de la même échancrure (69) forment ensemble une dépression (81) contre laquelle vient appuyer la nervure correspondante (77) lors de la mise en place du couvercle (19) sur le bol (11).

5. Appareil ménager selon l'une quelconque des revendications précédentes,
**caractérisé en ce que** le boîtier (36) du bloc moteur (35) logeant une couronne (61) disposée horizontalement dans l'espace annulaire (47) dudit boitier (36), montée élastiquement mobile en translation verticale et destinée, par sa face supérieure, a actionner l'interrupteur (56) dans le sens de sa fermeture lorsque le couvercle (19) est en place sur le bol (11), la bordure périphérique supérieure d'au moins deux portions latérales (65) diamétralement opposées du couvercle se prolonge vers le haut par un secteur formant une patte (71) qui est destinée à venir en appui contre la face inférieure de ladite couronne (61) pour commander celle-ci en vue de l'actionnement de l'interrupteur (56).

6. Appareil ménager selon la revendication 5,
**caractérisé en ce que** les deux faces externes des deux portions latérales (65) du couvercle pourvues chacune de ladite patte de commande (71) comportent respectivement deux bossages (73) venant s'engager par encliquetage, lors de la mise en place du couvercle (19) sur le bol (11), dans deux encoches (75) conjuguées pratiquées dans la face interne de la paroi latérale (15) du bol (11).

7. Appareil ménager selon l'une quelconque des revendications précédentes,
**caractérisé en ce que** le couvercle (19) est réalisé d'une seule pièce en une matière thermoplastique à propriété élastique, telle qu'un polyoxyméthylène.

## Claims

1. Household appliance with a rotary knife, such as a chopper, having an open bowl (11) on which is placed a removable closure cover (19) shaped like a dish having a bottom (13) and a lateral wall (15), and in which extends vertically a removable rotary shaft (22), the bottom end (23) of which carries a knife (26) and is engaged in a bearing (24) mounted on the bottom of the bowl (11), and the top end (27) of which passes through the bottom of the cover (19), and a removable motor unit (35) comprising a casing (36) partly arranged around the cover (19) and enclosing an electric motor (41) whose output shaft (49) is adapted to come to be coupled with the shaft (22) carrying the knife,
**characterised in that** the lateral wall (48) of the cover (19) is composed of a plurality of lateral portions (65) which are separated from each other and which are elastically deformable between a working position into which they are brought by inward elastic deformation when the cover (19) is fitted on the bowl (11) and in which their top parts (67, 71) engage in an annular space (47) situated at the peripheral border of the lower part of the casing (36) of the motor unit (35) and at least one of them (71) actuates a switch (56) arranged in the electrical supply circuit of the motor so as to enable the motor to be started up, and an idle position in which their top parts (71) are in abutment against the bottom edge (43) of the lateral wall of the casing (36) of the motor unit when the cover (19) is not correctly fitted on the bowl (11).

2. Household appliance according to claim 1,
**characterised in that** the lateral portions (65) of the cover (19) are shaped substantially like large petals which are spaced apart from each other by scallops (69) and which together form a corolla.

3. Household appliance according to claim 2,
**characterised in that** the internal face of the lateral wall (15) of the bowl (11) has, substantially as from the top edge (17) of said wall (15), a plurality of vertical ribs forming cams (77) equal in number to the scallops (69) in the cover, on each of which there come to engage two respective regions (79) of two lateral portions (65) of the cover situated on each side of the same scallop (69) so as to assist the inward elastic deformation of the lateral portions (65) of the cover (19) when the latter is fitted on the bowl (11).

4. Household appliance according to claim 3,
**characterised in that** the two respective regions (79) of the two lateral portions (65) of the cover situated on each side of the same scallop (69) form together a hollow (81) against which the corresponding rib (77) comes to bear when the cover (19) is fitted on the bowl (11).

5. Household appliance according to any one of the preceding claims,
**characterised in that** the casing (36) of the motor unit (35) housing a ring (61) disposed horizontally in the annular space (47) in said casing (36), mounted so as to be elastically movable in vertical translation and designed, through its top face, to actuate the switch (56) in the direction of its closure when the cover (19) is in place on the bowl (11), the top peripheral edge of at least two diametrically opposed lateral portions (65) of the cover is extended upwards by a sector forming a lug (71) which is designed to come into abutment against the bottom face of said ring (61) in order to control the latter in view of actuating the switch (56).

6. Household appliance according to claim 5,
**characterised in that** the two external faces of two lateral portions (65) of the cover each provided with said control lug (71) have respectively two protrusions (73) coming to engage by snapping in, when the cover (19) is fitted on the bowl (11), in two conjugate notches (75) formed in the internal face of the lateral wall (15) of the bowl (11).

7. Household appliance according to any one of the preceding claims,
**characterised in that** the cover (19) is produced in a single piece from a thermoplastic material with elastic properties, such as a polyoxymethylene.

## Patentansprüche

1. Küchengerät mit drehendem Messer, wie ein Zerkleinerer, mit einer offenen Schüssel (11), auf die ein abnehmbarer Verschlußdeckel (19) aufgesetzt ist, der die Form einer Schale mit einem Boden (13) und einer Seitenwand (15) hat, und in die sich vertikal eine abnehmbare drehbare Welle (22) erstreckt, deren unteres Ende (23) ein Messer (26) trägt und in ein am Boden der Schüssel (11) montiertes Lager (24) eingesetzt ist und deren oberes Ende (27) den Boden des Deckels (19) durchsetzt und mit einem abnehmbaren Motorblock (35) mit einem Gehäuse (36), das teilweise rings um den Deckel (19) angeordnet ist, und einen Elektromotor (41) umschließt, dessen Abtriebswelle (49) zur Kupplung mit der das Messer tragenden Welle (22) eingerichtet ist, **dadurch gekennzeichnet, daß** die Seitenwand (48) des Deckels (19) aus einer Mehrzahl von Seitenabschnitten (65) zusammengesetzt ist, die voneinander getrennt und elastisch verformbar sind zwischen einer Arbeitsstellung, in die sie durch elastische Verformung nach innen beim Aufsetzen des Deckels (19) auf die Schüssel (11) gebracht werden und in der ihre oberen Abschnitte (67, 71) in einen Ringraum (47) eingreifen, der in einer Umfangsrandzone des unteren Teils des Gehäuses (36) des Motorblocks (35) vorhanden ist und in der mindestens einer von ihnen (71) einen im Stromkreis des Motors liegenden Schalter (56) betätigt, um das Einschalten des Motors zu ermöglichen, und einer Ruhestellung, in der ihre oberen Abschnitte (71) gegen den unteren Rand (43) der Seitenwand des Gehäuses (36) des Motorblocks anschlagen, wenn der Deckel (19) nicht richtig auf die Schüssel (11) aufgesetzt ist.

2. Küchengerät nach Anspruch 1, **dadurch gekennzeichnet, daß** die Seitenabschnitte (65) des Deckels (19) im wesentlichen in der Art von großen Blütenblättern geformt sind, die voneinander durch Einschnitte (69) getrennt sind und zusammen eine Blütenkrone bilden.

3. Küchengerät nach Anspruch 2, **dadurch gekennzeichnet, daß** die Innenseite der Seitenwand (15) der Schüssel (11) im wesentlichen ausgehend vom oberen Rand (17) dieser Wand (15) eine Mehrzahl von vertikalen, Nocken (77) bildenden Rippen von gleicher Anzahl wie die Zahl der Einschnitte (69) des Deckels aufweist, über die jeweils zwei entsprechende Bereiche (79) von zwei Seitenabschnitten (65) des Deckels, die beiderseits ein und desselben Einschnitts (69) liegen, so eingreifen, daß die elastische Verformung der Seitenabschnitte (65) des Deckels (19) beim Aufsetzen des letzteren auf die Schüssel (11) begünstigt wird.

4. Küchengerät nach Anspruch 3, **dadurch gekennzeichnet, daß** die zwei jeweiligen Bereiche (79) der zwei Seitenabschnitte (65) des Deckels, die beiderseits des gleichen Einschnitts (69) liegen, miteinander eine Vertiefung (81) bilden, gegen welche die entsprechende Rippe (77) beim Aufsetzen des Deckels (19) auf die Schüssel (11) drückt.

5. Küchengerät nach einem der vorangehenden Ansprüche, **dadurch gekennzeichnet, daß** das Gehäuse (36) des Motorblocks (35) den Sitz für einen im Ringraum (47) des Gehäuses (36) horizontal angeordneten Kranz (61) bildet, der vertikal elastisch verschiebbar gehalten ist und dazu dient, mit seiner oberen Seite den Schalter (56) im Schließsinn zu betätigen, wenn der Deckel (19) an seinem Platz an der Schüssel (11) ist, wobei der obere Umfangsrand von mindestens zwei diametral entgegengesetzten Seitenabschnitten (65) des Deckels nach oben durch einen Sektor verlängert ist, der einen Lappen (71) bildet, der gegen die Unterseite des Kranzes (61) anschlägt, um diesen im Sinn der Betätigung des Schalters (56) zu steuern.

6. Küchengerät nach Anspruch 5, **dadurch gekennzeichnet, daß** die zwei Außenseiten der zwei Seitenabschnitte (65) des Deckels, die jeder mit dem Betätigungslappen (71) versehen sind, jeweils zwei Rastnasen (73) aufweisen, die durch Einrasten beim Aufsetzen des Deckels (19) auf die Schüssel (11) in zwei zugeordnete Rastkerben (75) einrasten, die in der Innenseite der Seitenwand (15) der Schüssel (11) ausgebildet sind.

7. Küchengerät nach einem der vorangehenden Ansprüche, **dadurch gekennzeichnet, daß** der Deckel (19) einstückig aus einem elastischen thermoplastischen Material wie einem Polyoxymethylen hergestellt ist.
